# EUROPÄISCHE PATENTANMELDUNG

(11) **EP 0 629 746 A2**
(43) Veröffentlichungstag der Anmeldung: **21.12.1994**
(21) Anmeldenummer: 94108152.3
(22) Anmeldetag: 26.05.1994
(51) Int. Cl.: E02D 31/00, E02D 31/06, B09B 3/00

(54) **Schutzschicht für Deponie und andere Abdichtungen**

(30) Priorität: 18.06.1993 DE 4320310; 18.05.1994 DE 4417312
(71) Anmelder: HT TROPLAST AG, D-53839 Troisdorf (DE)
(72) Erfinder: Kopp, Bernd, D-47669 Wachtendonk (DE); August, Hans, Prof. Dr.-Ing., D-14089 Berlin (DE)

(57) **Zusammenfassung**

Die Erfindung betrifft eine Schutzschicht (1) für Deponie- und andere Abdichtungen, insbesondere für solche mit Kunststoffdichtungsbahnen. Die Schutzschicht (1) besteht aus einer Vielzahl von Formkörpern, Fäden o. dgl. aus Kunststoff, die miteinander zu einem elastischen Flächengebilde verbunden sind. Die Schutzschicht (1) weist einen Hohlraumanteil von 20 - 50% auf und ist auf mindestens einer Seite für mineralische Stoffe durchlässig.

## Beschreibung

### Technisches Gebiet

Die vorliegende Erfindung bezieht sich auf eine Schutzschicht für Deponie- und andere Abdichtungen, insbesondere für solche mit Kunststoffdichtungsbahnen.

Schutzschichten im Deponiebau sind Bestandteil eines mehrschichtigen Aufbaues, der sich im allgemeinen von oben nach unten aus folgenden Schichten zusammensetzt:
- Feinmüll
- Drainageschicht
- Schutzschicht
- Kunststoffdichtungsbahn
- mineralische Abdichtung
Die Drainageschicht besteht in der Regel aus Kies. Dieser Kies soll einen möglichst geringen Feinanteil enthalten, wie es z.B. auf gewaschenen Kies mit 16-32'er Körnung zutrifft, um die Funktionsfähigkeit der Drainageschicht auch langfristig sicherzustellen.

Die Schutzschicht soll die Kunststoffdichtungsbahn vor mechanischen Beschädigungen durch den Drainagekies während der gesamten Lebensdauer der Kunststoffdichtungsbahn schützen. Beschädigungen können sowohl beim Aufbringen der oberen Schichten als auch durch den Druck der Müll-Auflast verursacht werden, hier besonders unter dem Einfluß der in den Deponien auftretenden Betriebstemperaturen.

Erwünscht ist außerdem eine gute Isolationseigenschaft der Schutzschicht, damit die mineralische Abdichtung während der Deponieverfüllung vor Frost geschützt wird.

### Stand der Technik

In der DE-A-40 12 301 wird zum Einsatz bei Deponieabdichtungen eine Schalungshülle mit gewebten Hüllenwänden beschrieben, in die auf der Baustelle Beton als Schutzschicht für die Kunststoffdichtungsbahn eingefüllt wird. Dieses Verfahren bedingt einen hohen Aufwand zum Herstellen der Schutzschicht durch Einfüllen des Betons in die Schalungshülle auf der Baustelle. Die Schutzschicht kann deshalb naturgemäß nicht fertig auf der Baustelle angeliefert werden. Darüberhinaus entspricht die Wärmeleitfähigkeit dieser Beton-Schutzschicht nur der des Betons.

In der DE-A-30 22 019 wird eine Schutzschicht u.a. für den Tiefbaubereich offenbart, die aus miteinander verbundenem Gummigranulat besteht und mit der Dichtungsbahn verklebt ist. Diese Schutzschicht hat für den Einsatz im Deponiebereich keine ausreichende Chemikalienbeständigkeit.

Es ist außerdem bekannt, dicke Kunststoffvliese aus Polyethylen-Fäden als Schutzschicht zu benutzen. Diese Vliese haben jedoch ebenfalls nur eine begrenzte chemische Beständigkeit. Gerade die Langzeitbeständigkeit der Schutzschicht gegen den Einfluß chemisch agressiver Elemente ist aber eine immer stärker beachtete Anforderung im Deponiebau.

Die DE-GM-76 10 269 offenbart eine Erosionsschutzmatte aus Fäden mit in einer Ebene nebeneinanderliegenden, wabenartigen Zellen, welche mit sehr grobkörnigen, mineralischen Partikeln gefüllt werden sollen. Die Zellen sind nach oben in ihrer ganzen Weite geöffnet, so daß die Matte ungefüllt keine nennenswerte Wärmedämmung für den jeweiligen Untergrund bieten kann.

Bei der in der DE-A-40 38 962 beschriebenen Schutzmatte mit einer eingelagerten Mischung aus mineralischen und/oder Kunststoff-Partikeln ist die nachträgliche Verfüllung der Matte mit mineralischen Stoffen nicht möglich, so daß auch hier die Wärmedämmung für den Untergrund mangelhaft ist.

### Aufgabe der Erfindung

Aufgabe dieser Erfindung ist es, ein Verfahren zur Herstellung von Abdichtungen und eine Schutzschicht für Deponie- und andere Abdichtungen, insbesondere für solche mit Kunststoffdichtungsbahnen, zur Verfügung zu stellen, wobei die Schutzschicht fabrikmäßig fertiggestellt und leicht verlegt werden kann und außerdem eine für den Deponiebereich ausreichende, langanhaltende Chemikalienbeständigkeit und eine gute Wärmedämmung aufweist.

### Darstellung der Erfindung

Obige Aufgabe wird gelöst durch eine Schutzschicht mit den Merkmalen des Anspruchs 1, ihre Verwendung nach Anspruch 14 und durch Verfahren zur Herstellung einer Abdichtung mit den Merkmalen der Ansprüche 15 bis 18, bevorzugt in Verbindung mit den Merkmalen der Unteransprüche.

Die erfindungsgemäße Schutzschicht basiert auf Kunststoff oder Kunststoffmischungen. In besonderen Ausführungsformen kann auch beliebiges unsortiertes und nicht besonders aufbereitetes Recyclingmaterial entweder allein oder in Mischungen auch mit Frischmaterial, für welches bevorzugt Polyethylen oder Polypropylen eingesetzt wird, verwendet werden.

Zur Herstellung der Schutzschicht gemäß der Erfindung wird eine Vielzahl an Formkörper, Fäden o. dgl. aus den genannten Materialien miteinander so zu einem elastischen Flächengebilde verbunden, daß sich die Schutzschicht durch einen Hohlraumanteil zwischen 20 und 50% auszeichnet und auf mindestens einer Seite für mineralische Stoffe durchlässig ist. Es sind deshalb Formkörper, Fäden o. dgl. von solcher Größe und Formgebung einzusetzen, daß in dem Fachmann an sich bekannter Weise der erfindungsgemäße Hohlraumanteil der Schutzschicht und die mindestens einseitige Durchlässigkeit für mineralische Stoffe entsteht.

Die Hohlräume der Schutzschicht dienen im ungefüllten Zustand zur Unterstützung der Wärmedämmung, insbesondere damit die z.B. durch Ton realisierte mineralische Abdichtung in der Bauphase nicht durch Frostschäden zerstört wird. Außerdem muß ein genügend großer Hohlraumanteil zur Aufnahme von mineralischen Stoffen vorhanden sein. Der Hohlraumanteil der Schutzschicht soll deshalb nicht unterhalb von 20% liegen. Da die Schutzschicht zusätzlich die Kunststoffdichtungsbahn vor mechanischen Beschädigungen bewahren soll, ist aber andererseits ein genügender Kunststoffanteil in der Schutzschicht notwendig, so daß der Hohlraumanteil der Schutzschicht 50% nicht überschreiten soll.

Die Hohlräume können entweder bereits während des Deponiebaus mit mineralischen Stoffen, z.B. Sand, Bentonit oder Reststoffen wie Aschen u.ä., ganz oder teilweise gefüllt werden oder versanden im Laufe der Zeit beim Betrieb der Deponie. Die mineralischen Stoffe in den Hohlräumen der Schutzschicht sichern den Bestand und die Wirksamkeit der Schutzschicht auch nach dem Abbau des Kunststoffes.

In einer besonderen Ausführungsform haben die Formkörper, Fäden o. dgl. ein Verhältnis von Volumen zu Oberfläche, das größer als 0,25 mm ist. Weitere mögliche Ausführungsformen der Formkörper sind Kunststoffschnipsel, -granulate oder -preßkörper. Alle Ausführungsformen der Formkörper, Fäden o. dgl. sind entsprechend dem erwünschten Hohlraumanteil der Schutzschicht in bekannter Weise zu gestalten.

Die Verbindung der Formkörper, Fäden o. dgl. zu einem elastischen Flächengebilde kann auf verschiedene Art und Weise realisiert werden, wobei immer mindestens eine Seite des Flächengebildes in für mineralische Stoffe durchlässiger Form ausgebildet wird. Folgende Möglichkeiten werden dabei bevorzugt: Verbindung der Formkörper, Fäden o. dgl. durch
- eine Hülle, die durch zwei aus thermoplastischem Kunststoff gewebten, im wesentlichen parallel zueinander laufenden Hüllenwänden gebildet wird, wobei bekannte Verfahren zur Stabilisierung der Hülle in Frage kommen, z.B. mit Abstandshaltern zwischen den Hüllenwänden gemäß der DE-A-40 12 301, oder
- eine Hülle aus thermoplastischem Kunststoff, die durch zwei im wesentlichen parallel zueinander laufenden Folien gebildet wird, wobei sich zwischen den Folien entsprechend der DE-A-38 02 085 zur Stablisierung Trennstege befinden, die Waben oder Zellen bilden. Eine der beiden parallel zueinander verlaufenden Folien ist dabei in für die Durchlässigkeit von mineralischen Stoffen geeigneter Weise zu perforieren.
- punktweises Verkleben oder Verschweißen.
Sollen Fäden zu dem elastischen Flächengebilde verbunden werden, so können hierfür die zum Verarbeiten von Fäden üblichen Verfahren des Verwebens, Verwirkens, Vernadelns u.s.w. verwendet werden.

Die Oberseite des elastischen Flächengebildes kann bevorzugt so ausgestaltet werden, daß mineralische Stoffe zwar leicht durch Einschlämmen oder trockenes Einbringen in das Flächengebilde eindringen, nicht jedoch wieder herauskommen können. Dies kann beispielsweise durch ein Gitter mit geeigneter Maschenweite - allein oder in Kombination mit einer unterlegten, geeignet geschlitzten Folie- erreicht werden, so daß mineralische Stoffe die obere Hülle nur in einer Richtung, nämlich in die Schutzschicht hinein, passieren können.

Im Randbereich kann das elastische Flächengebilde so geformt, z.B. abgeschrägt, werden, daß sich die nebeneinander einzubauenden Schutzschichtbahnen überlappen. Eine derartige Maßnahme bewirkt einen durchgängigen Schutz der Kunststoffdichtungsbahn auch an den Berührungsstellen der Schutzschichtbahnen.

Das Flächengewicht der Schutzschicht liegt bevorzugt zwischen 0,3 und 120 kg/m², besonders bevorzugt zwischen 1 und 120 kg/m², ihre Dicke bevorzugt zwischen 5 und 200 mm, besonders bevorzugt zwischen 30 und 200 mm, und ihre Dichte bevorzugt zwischen 200 und 600 kg/m³.

Ganz besonders bevorzugt liegt das Flächengewicht der Schutzschicht zwischen 10 und 120 kg/m² und ihre Dicke zwischen 5 und 20 cm.

In einer bevorzugten Ausführungsform wird durch die erfindungsgemäße Schutzschicht die Funktion von Dränrohre in der Weise übernommen, daß in beliebigen Abständen die Dicke der Schutzschicht über eine zu wählende Breite verdoppelt bis verdreifacht wird. In diesen Verdickungen der erfindungsgemäßen Schutzschicht findet die Drainage statt, die sonst von den Dränrohren erzielt wird. Die Einsparung der Dränrohre ist ein erheblicher Vorteil in puncto Arbeits- und Kostenaufwand.

Bei dickeren Ausführungen der erfindungsgemäßen Schutzschicht besteht die Möglichkeit des Wegfalls einer gesonderten Drainageschicht, da diese Funktion durch die dicke, mit mineralischen Stoffen gefüllte Schutzschicht übernommen werden kann.

Ein weiterer Vorzug der erfindungsgemäßen Schutzschicht liegt nun darin, daß statt des besonders teuren gewaschenen und grobkörnigen Kieses für die Drainageschicht auch ungewaschener Kies mit hohem Feinanteil und kleinerer Körnung eingesetzt werden kann. Die Feinstoffe können mit den Sickerflüssigkeiten nach unten geschwemmt und von der Schutzschicht aufgenommen werden, was im Falle einer ungefüllt eingebauten Schutzschicht auch erwünscht ist, so daß einem Zusetzen der Drainageschicht entgegengewirkt werden kann.

Vorteilhaft ist außerdem, daß mit zunehmender Dicke der Schutzschicht das Mengenverhältnis von mineralischem Stoff zu Kunststoff kleiner werden kann, ohne die notwendige Langzeitschutzwirkung zu verlieren, was insbesondere bei der Verwendung von Kunststoffabfällen zur Kostenminimierung führt. Der Kunststoffanteil der Schutzschicht darf jedoch nicht soweit erhöht werden, daß unerwünschte stark federnden Eigenschaften der Schutzschicht auftreten. Voraussetzung für den Einbau einer Flächendrainage und der Dränrohre ist nämlich eine genügende Stabilität der Schutzschicht.

Statt einer einzigen dickeren Schutzschicht können auch mehrere Schichten der erfindungsgemäßen Schutzschicht eingesetzt werden.

Ein besonderer Vorzug der Erfindung liegt darin, daß eine eventuelle Drainageschicht nicht unmittelbar nach Einbau der Schutzschicht auf diese aufgebracht werden muß, um den Frostschutz der mineralischen Abdichtung während der allmählichen Müllverfüllung der Deponie zu gewährleisten, da dieses bereits durch die wärmedämmende Schutzschicht selber sichergestellt ist. Der Drainagekies braucht deshalb erst mit dem Fortschreiten der Müllverfüllung auf die Schutzschicht aufgebracht zu werden, so daß der Bau auch von sehr steilen Deponieböschungen ermöglicht wird. Diese Eigenschaft der Schutzschicht führt also dazu, daß der Deponieraum wesentlich besser ausgenutzt werden kann.

Die für die Schutzschicht benutzten Materialien aus Kunststoff brauchen sich nicht durch gute chemische Beständigkeit auszuzeichnen. Sollten sich diese Materialien im Laufe der Lebensdauer der Deponie zersetzen, so bewirken die in den Hohlräumen der Schutzschicht enthaltenen mineralischen Stoffe nach wie vor einen Schutz der Kunststoffdichtungsbahn.

Der Vorteil der Erfindung liegt also in der wärmedämmenden Eigenschaft der Schutzschicht, der Chemikalienbeständigkeit der mit mineralischen Stoffen gefüllten Schutzschicht und möglichen Einsparungen bei Drainageschicht und Dränrohren bei gleichzeitig leichter Verlegbarkeit ohne zusätzlichen Baustellenaufwand. Desweiteren erlaubt der Einsatz von Recyclingmaterial und mineralischen Reststoffen eine kostengünstige Herstellung der Schutzschicht ohne Qualitätseinbußen und -auf Grund des Reststoffeinsatzes-, ohne daß zusätzliches Deponievolumen bei dickeren Schutzschchten benötigt wird.

Die Erfindung wird nachfolgend anhand eines Ausführungsbeispieles sowie der Zeichnungen näher erläutert.

### Kurze Beschreibung der Zeichnungen

Es zeigen
- Figur 1: einen Querschnitt durch die Schutzschicht bestehend aus Hülle und Formkörpern und
- Figur 2: den Schichtaufbau einer Deponieabdichtung.

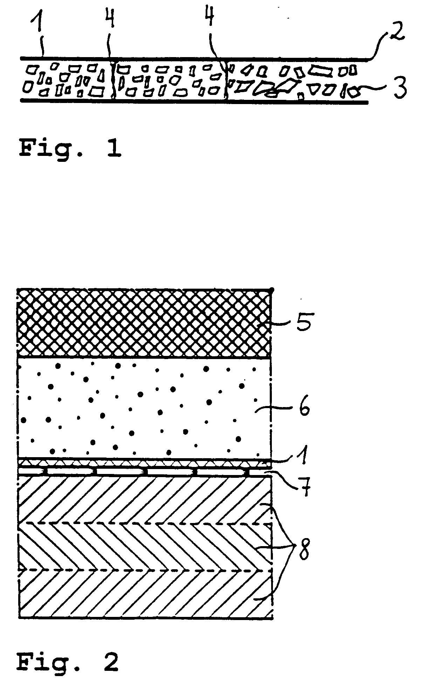

### Wege zur Ausführung der Erfindung

### Beispiel 1

Die Schutzschicht 1 wird aus einer Hülle 2 von Gitterbahnen, die kissenartig miteinander verbunden sind, und darin eingefüllten Kunststoffschnipseln 3 gebildet. Die Hülle 2 besteht aus Polyethylen. Die Kunststoffschnipsel 3 werden auf herkömmliche Weise aus beliebigem Kunststoff-Recycling-Material gewonnen. Die Abmessung der unregelmäßig geformten Kunststoffschnipsel 3 liegt zwischen 3 und 9 mm, im Mittel bei 6 mm. Der Hohlraumanteil der Schutzschicht 1 beträgt dann ca. 33%.

Die Hülle 2 der Schutzschicht 1 wird so gefertigt, daß ihre Breite 5 m und ihre Länge 50 m beträgt. Es werden so viele Kunststoffschnipsel 3 in die Hülle 2 gefüllt, daß die Schutzschicht 1 eine Dicke von 10 cm erreicht. Eine gleichmäßige Füllung der Hülle 2 mit den Kunststoffschnipseln 3 wird durch Abstandshalter 4 zwischen den Hüllenwänden gewährleistet, wie sie in der DE-A-40 12 301 beschrieben sind.

Die Schutzschicht 1 wird aufgerollt zur Verlegestelle transportiert und dort auf der Kunststoffdichtungsbahn 7, die die dreischichtige, mineralische Abdichtung 8 begrenzt, ausgerollt. Anschließend wird in die Hohlräume der Schutzschicht 1 Sand eingebracht. Zur Vollendung des mehrschichtigen Aufbaues der Deponieabdichtung wird auf die Schutzschicht 1 dann die Drainageschicht 6 und anschließend der Feinmüll 5 gegeben.

### Beispiel 2

Eine zweite Möglichkeit die Schutzschicht 1 auszuführen, besteht darin, die Hülle 2 wie in Beispiel 1 aus Polypropylen herzustellen und entsprechend Beispiel 1 mit Kunststoffschnipseln 3 zu füllen.

Die Schutzschicht 1 wird aufgerollt zur Verlegestelle transportiert und dort auf der Kunststoffdichtungsbahn 7, die die dreischichtige, mineralische Abdichtung 8 begrenzt, ausgerollt. Zur Vollendung des mehrschichtigen Aufbaues der Deponieabdichtung wird auf die ungefüllte Schutzschicht 1 dann die Drainageschicht 6 aus ungewaschenem Kies mit 0-32'er Körnung und anschließend der Feinmüll 5 gegeben. Im Laufe der Zeit werden die Hohlräume der Schutzschicht 1 mit den eingeschwemmten oder eingesickerten Feinanteilen des Drainagekieses aufgefüllt.

## Patentansprüche

1. Schutzschicht (1) für Deponie- oder andere Abdichtungen mit einer Vielzahl von Formkörpern, Fäden o. dgl. (3) aus Kunststoff, wobei die Formkörper, Fäden o. dgl. miteinander zu einem elastischen, Flächengebilde verbunden sind, ***dadurch gekennzeichnet***, daß der Hohlraumanteil der Schutzschicht (1) 20 - 50% beträgt und die Schutzschicht (1) auf mindestens einer Seite für mineralische Stoffe durchlässig ist.

2. Schutzschicht (1) nach Anspruch 1, ***dadurch gekennzeichnet***, daß die Vielzahl von Formkörpern, Fäden o. dgl. (3) durch eine Hülle (2) miteinander verbunden ist, wobei die Hülle (2) zwei aus thermoplastischem Kunststoff gewebte, im wesentlichen parallel zueinander verlaufende Hüllenwände aufweist.

3. Schutzschicht nach Anspruch 1, ***dadurch gekennzeichnet***, daß die Vielzahl von Formkörpern, Fäden o. dgl. punktweise durch Verkleben oder Verschweißen miteinander zu dem elastischen Flächengebilde verbunden ist.

4. Schutzschicht nach Anspruch 1 mit einer Vielzahl von Fäden aus Kunststoff, ***dadurch gekennzeichne*****t**, daß die Fäden durch Verweben, Verwirken, Vernadeln o. dgl. zu dem elastischen Flächengebilde verbunden sind.

5. Schutzschicht nach Anspruch 1, ***gekennzeichnet durch*** eine Vielzahl von Formkörpern, Fäden o. dgl. (3) aus Polyethylen, Polypropylen oder eine Mischung aus Polyethylen und Polypropylen, wobei die Formkörper, Fäden o. dgl. ein Verhältnis von Volumen zu Oberfläche > 0,25 mm aufweisen.

6. Schutzschicht (1) nach einem der Ansprüche 1 bis 5, ***gekennzeichnet durch*** die Verwendung von Recyclingmaterial für den Kunststoffanteil.

7. Schutzschicht (1) nach einem der Ansprüche 1 bis 6, ***gekennzeichnet durch*** ein Flächengewicht von 0,3 bis 120 kg/m².

8. Schutzschicht (1) nach einem der Ansprüche 1 bis 7, ***gekennzeichnet durch*** eine Dichte von 200 bis 600 kg/m³.

9. Schutzschicht (1) nach einem der Ansprüche 1 bis 8, ***gekennzeichnet durch*** eine Dicke von 5 mm bis 20 cm.

10. Schutzschicht (1) nach einem der Ansprüche 1 bis 9, ***dadurch gekennzeichnet***, daß die Schutzschicht (1) mit mineralischen Stoffen gefüllt wird.

11. Schutzschicht (1) nach Anspruch 10, ***dadurch gekennzeichnet,*** daß die Oberseite der Schutzschicht (1) ein Gitter mit einer derartigen Maschenweite aufweist, so daß die mineralischen Stoffe die obere Hülle der Schutzschicht (1) nur in einer Richtung, nämlich in die Schutzschicht (1) hinein, passieren können.

12. Schutzschicht (1) nach einem der Ansprüche 1 bis 11, ***dadurch gekennzeichnet***, daß die Schutzschicht (1) in ihrem Randbereich so geformt ist, daß sich die nebeneinander einzubauenden Schutzschichtbahnen überlappen.

13. Schutzschicht (1) nach einem der Ansprüche 1 bis 12, ***dadurch gekennzeichnet***, daß die Dicke der Schutzschicht (1) in beliebigen Abständen über eine zu wählende Breite verdoppelt bis verdreifacht wird.

14. Verwendung der Schutzschicht (1) nach einem der Ansprüche 1 bis 13 für eine Deponieabdichtung.

15. Verfahren zur Herstellung einer Abdichtung mit Hilfe der Schutzschicht (1) nach einem der Ansprüche 1 bis 13, ***dadurch gekennzeichnet*****,** daß auf die Schutzschicht (1) eine Schicht aus mineralischen Stoffen aufgebracht wird.

16. Verfahren zur Herstellung einer Abdichtung mit Hilfe der Schutzschicht (1) nach Anspruch 15, ***dadurch gekennzeichnet***, daß auf die Schutzschicht (1) Kies mit Körnungen zwischen 0 und 32 aufgebracht wird.

17. Verfahren zur Herstellung einer Deponieabdichtung mit Hilfe der Schutzschicht (1) nach einem der Ansprüche 1 bis 13, ***dadurch gekennzeichnet***, daß eine Drainageschicht (6) mit dem Fortschreiten der Müllverfüllung der Deponie auf die Schutzschicht (1) aufgebracht wird.

18. Verfahren zur Herstellung einer Deponieabdichtung mit Hilfe der Schutzschicht (1) nach einem der Ansprüche 1 bis 13, ***dadurch gekennzeichnet***, daß auf die mit mineralischen Stoffen gefüllte Schutzschicht (1) Feinmüll aufgebracht wird.
